# EUROPEAN PATENT APPLICATION

(11) **EP 1 637 724 A1**
(43) Date of publication of application: **22.03.2006**
(21) Application number: 04425701.2
(22) Date of filing: 20.09.2004
(51) Int. Cl.: F02F 7/00, F16C 9/02, F16M 1/025

(54) **Casing for an internal combustion engine, particularly for motor-vehicles**

(71) Applicant: C.R.F. Società Consortile per Azioni, 10043 Orbassano (Torino) (IT)
(72) Inventor: Sereni, Sandrine, C.R.F. Società Cons. per Azioni, 10043 Orbassano (Torino) (IT); Bulgarelli, Carlo, C.R.F. Società Cons. per Azioni, 10043 Orbassano (Torino) (IT); Occella, Sergio, 10100 Torino (IT)
(74) Representative: Notaro, Giancarlo

(57) **Abstract**

A casing for an internal combustion engine, particularly for motor-vehicles, includes an upper part or cylinder block (2) made of an aluminum alloy, and a lower part (6) made of a magnesium alloy and, in turn, including an upper section (7) and a lower section (8) overlapped with each other along a plane substantially containing the axis of the engine crankshaft. The supports of the engine crankshaft are defined by inserts (11, 12) incorporated within the sections (7, 8) based on magnesium. The three parts (2, 7, 8) of the casing are fixed together by means of screws inserted from the lower side of the casing and screwed inside threaded holes obtained in the aluminum cylinder block.

## Description

The present invention relates to a casing for an internal combustion engine, of the type including an upper part, or cylinder block, made of an aluminum-based material, in which the cylinders and, generally, the openings for the cooling liquid are defined, and a lower part, made of a magnesium-based material, fixed to the cylinder block by means of screws passing through the lower part, which engage threaded holes obtained in the aluminum-based cylinder block, and support means for the engine crankshaft associated with said lower part.

Engine casings of the above-indicated type are already known: a solution, for example, is described and shown in the German Patent application DE 100 32 845 A1. The use of the magnesium allows a considerable lightening of the engine with respect to the traditional solutions. In fact, the magnesium has a density of 1700 kg/m³, to 2700 kg/m³ of the aluminum and 7250 kg/m³ of the cast iron. On the other hand, the magnesium gives rise to resistance problems and, if contacted with the fluid of the cooling circuit of the engine, corrosion problems. In view of overcoming such drawbacks, it has already been proposed (see for example the prior document above-mentioned) to carry out a disassembling of the casing structure between an upper part, constituting the cylinder block, made of an aluminum-based material, and a lower part, which is not assigned for contacting the cooling liquid during the engine operation, made of a magnesium-based material. For the purpose of avoiding undesired stresses on the magnesium structure, the known solution above-mentioned also foresees the use of fastening screws of the two parts of the casing which are inserted from the side of the lower part and which engage threaded holes obtained in the aluminum part. In this way, the structure made of magnesium does not show the threads for the connection of the joining screws between the two parts, thus avoiding the problems related to a weakness of the thread of the relative internal thread and further the concentration of the forces discharged from the screws takes place on a more suitable material (aluminum). With solutions of this type, however, it is evident that the structure of the magnesium lower part is still subjected to considerable tensile stresses induced by the forces discharged form the crankshaft on the journals (the lower structure of the covers is not shown in the drawing, therefore it should be considered traditional). There is therefore the weakness of the connecting bosses of the clamping screws of the journals, which are necessarily carried out in the magnesium lower structure.

Starting from the prior art above-discussed, the present invention aims to carry out an engine casing of the type above-indicated which presents very high lightness features and even better structural performances than those obtained with the known solutions.

In view of attaining this aim, the object of the invention is a casing having the features shown at the beginning of the present description and further characterized in that the aforesaid fastening screws sequentially pass through the aforementioned support means (8) (in the simpler case the covers of crankshaft bearing) of the engine crankshaft and the aforesaid magnesium-based lower section (7) before engaging the threaded holes obtained in said aluminum-based upper part.

By virtue of the features above-mentioned, the engine according to the invention is able to reach an optimal compromise between the need of obtaining the lowest possible weight and the requirement of ensuring high resistance characteristics. In this way, the whole magnesium lower structure is always under compression and does not house the internal threads of the fastening screws of the covers of crankshaft bearing.

A preferred solution foresees, in the supports zone, the presence of inserts, both integrally co-melted and inserted as fiber stiffeners (e.g. aluminum fibers). The support part of the crankshaft may be preferably carried out by incorporating the covers in a single magnesium component. Also in this structure, inserts similar to those present in the magnesium lower part will exist. Such inserts will show the surfaces suitable for housing the head of the assembly screws of the entire structure. The whole shows in this way the advantage of having the entire magnesium structure always under compression.

Further features and advantages of the invention will result from the following description with reference to the enclosed drawings, which are given by mere way of not limitative example, wherein:
- figure 1 is a perspective view of an engine casing according to the invention,
- figure 2 is a sectional view of the engine casing according to the invention in a plane orthogonal to the axis of the engine crankshaft,
- figure 3 is a perspective view of the upper part, based on aluminum, of the casing of figure 1,

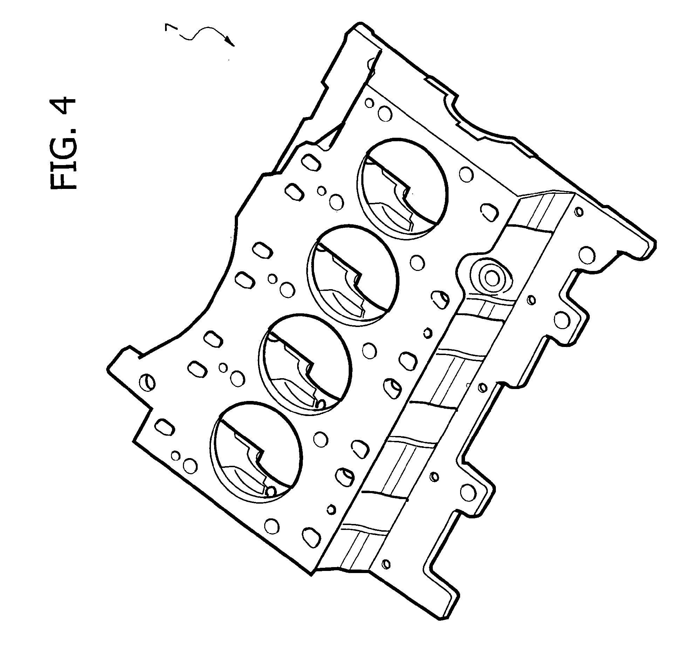

- figure 4 is a perspective view of the first section constituting the aluminum-based lower part of the casing of figure 1,
- figure 5 is a perspective view of the aluminum-based inserts incorporated in the casing section shown in figure 4,
- figure 6 is a perspective view of the lower magnesium based section, of the casing, and
- figure 7 is a perspective view of one of the inserts incorporated in the lower section of the casing shown in figure 6.

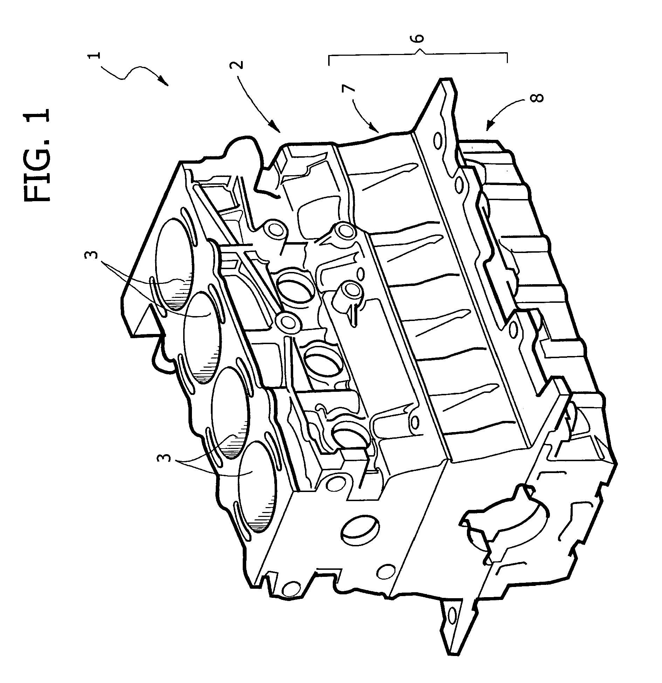

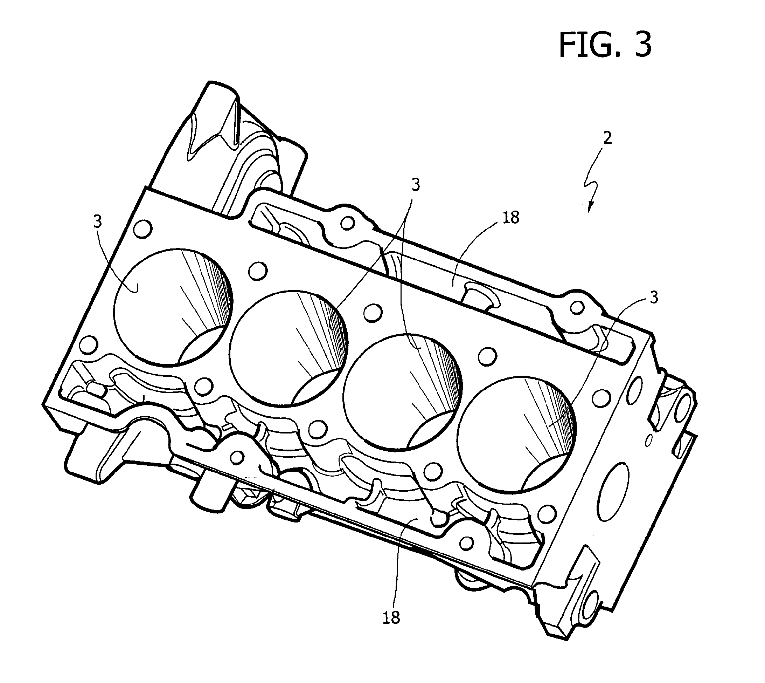

In figure 1, numeral 1 generally shows a casing for an internal combustion engine for motor-vehicles, with four in-line cylinders. The casing 1 includes an upper part or cylinder block 2, made of an aluminum alloy, which defines the cylinders 3 (see also figure 3) and the openings for the cooling liquid of the engine.

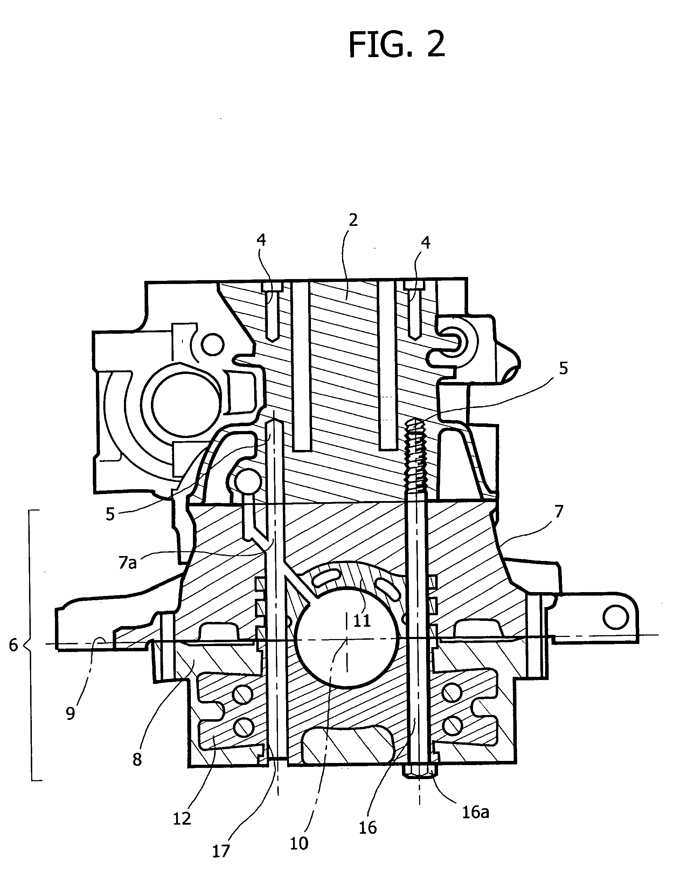

The cylinder block 2 made of an aluminum alloy presents on its upper surface threaded holes 4 (figure 2) for the engagement of the fastening screws of the cylinders head to the engine casing, and, on its lower surface, threaded holes 5 for the engagement of the screws which fasten the lower parts of the casing to the cylinder block.

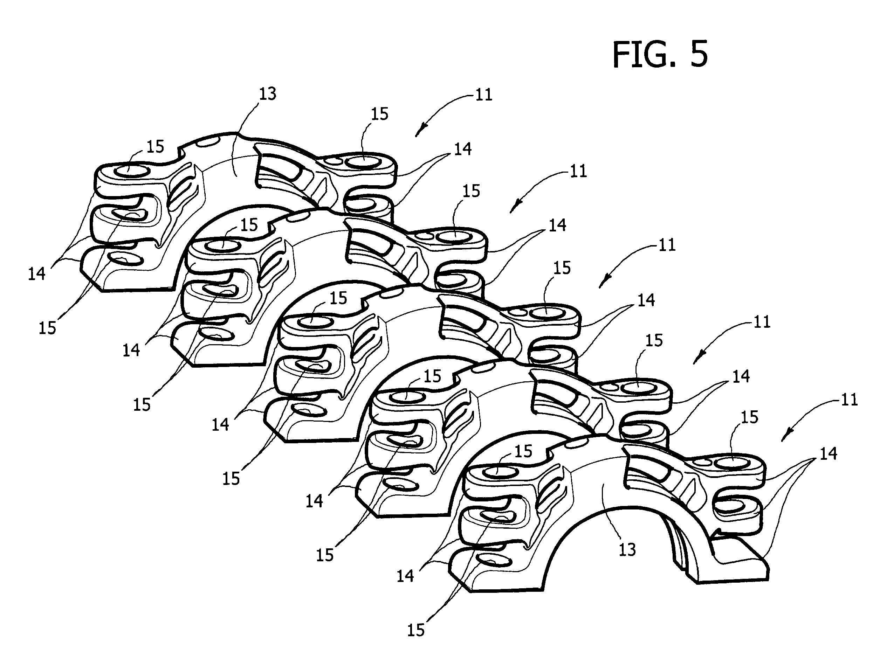

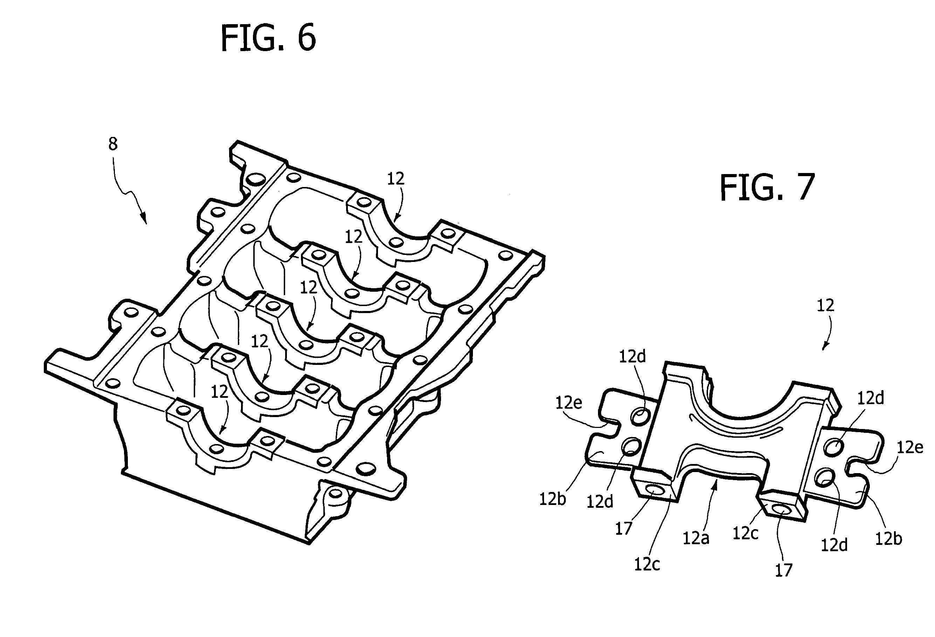

Still with reference to figures 1, 2, the casing 1 includes a lower part 6 which is made, for the lightening purpose, of a magnesium alloy. According to a preferred embodiment of the invention, the part 6 is comprised, in turn, of an upper section 7 and a lower section 8, both made of magnesium, which are opposite with each other in correspondence with a plane 9 substantially passing through the axis 10 of the engine crankshaft and perpendicular to the axes of cylinders 3. Further, the supports for the engine crankshaft are defined by upper covers 11 (figure 5) and lower covers 12 (figures 6, 7) which are in the form of aluminum alloy inserts incorporated by melting within the material forming the upper magnesium section 7 and the lower section 8, respectively.

In the example of realization shown (figure 5), each of the upper covers 11 shows a curved central body 13 ending at each end with three parallel and spaced ears 14, having coaxial holes 15 for passing through screws 16 (figure 2) which fix the two magnesium sections 7, 8 to the aluminum cylinder block 2. The screws 16 are inserted from the side of the lower section 8 and have heads 16a which abut against support surfaces defined by the inserts 12 forming the lower covers. The screws 16 are screwed within the threaded holes 5 obtained in the aluminum part 2. In this way, the magnesium sections 7, 8 do not show threaded holes which could involve resistance problems, and further they are only subjected to compression, and not tensile, stresses, which allows again to obtain an optimal behavior of the magnesium alloy from the structural point of view.

The arrangement of the inserts 11, 12 allows to further improve the structural performances of the magnesium parts from the point of view of stresses resistance, deformations control, expansion and bearings play. The particular geometry above described of the inserts 11, as well as the one that will be described below with reference to the inserts 12, allows to promote the fastening between the parts and gives also rise to a better structural collaboration in the direction transversal to the engine axis, which is very important when using magnesium.

The inserts 12 constituting the lower covers show a central body generally H-shaped, represented with 12a in figure 7, from which two flat wings 12b laterally protrude, generally coplanar to the central portion. The inserts 12 are crossed by holes 17 for the engagement of the fastening screws 16 and, as already above-indicated, they define support surfaces 12c for the heads 16a of the fastening screws 16. Also the inserts 12 contribute to the stresses resistance in the direction transversal to the engine axis. Such characteristic may be particularly advantageous in engines with V-shaped cylinders, which are subjected to considerable side thrusts.

The array of the inserts, their optimal fastening to the magnesium structures and the direct application of the forces exerted by the assembly screws, which is concentrated on the more suitable material of the inserts, besides placing under compression all the structure, also allows a better diffusion both of the stresses due to the clamping and those exerted by the combustion pressure.

Of course, the material forming the inserts 11, 12 may also be different from that indicated herein by way of example (aluminum). In any case, it is preferable that the material forming the inserts 11, 12 is the same. In particular, it is advisable the use of a material with an expansion coefficient which, although be-ing lower than magnesium one (which allows to limit the heat increase of the play of the crankshaft bearings), does not deviate enough to cause distortions, detachments or excessive stress in the structure. For example, the iron or the cast iron allow to greatly reduce the plays in the bearings, which occur because of the heat, but they more easily cause distortions and detachments between the parts made of different material. The use of the high resistance aluminum alloys is, on the contrary, particularly suitable: it reduces the global mass and is excellent from the point of view of the problems above-described, by virtue of the reduced thermal expansion coefficient.

Further advantages resulting from the particular engine structure above-described consist in the greater easiness of application of a co-melting process of the cylinder liners, by virtue of the simpler geometry of the cylinder block, which allows the use, in the casting step, of shorter plugs. The designer further enjoys a greater liberty in drawing the components from the point of view of the weight reduction and possible production methods (die casting, sand, etc.), both with respect to the aluminum parts and the magnesium parts.

Finally, in the cylinder block 2 (figure 3), two housings 18 for collecting the lubrication oil may be obtained, which facilitate the flow of the oil in the cup placed under the casing.

Obviously, further without prejudice to the principle of the invention, construction details and embodiments could widely vary with respect to what has been described and shown by mere way of example, without leaving the ambit of the present invention. For example, the support means for the engine crankshaft, comprised of the inserts 11, 12, could be integrated in one or both the sections 7, 8.

## Claims

1. Casing for an internal combustion engine, particularly for motor-vehicles, including:
an upper part or cylinder block (2) made of an aluminum-based material, in which the cylinders (3) and the openings for the cooling liquid are defined,
a lower part (6), or casing, made of a magnesium-based material, fixed to the cylinder block by means of screws (16) engaging threaded holes (5) obtained in the cylinder block based on aluminum,
support means for the engine crankshaft (8, 11, 12) associated with said lower part (6),
**characterized in that** the aforementioned fastening screws (16) sequentially pass through the aforesaid support means (8; 12, 11) of the engine crankshaft and the aforesaid magnesium-based lower section (6) before engaging the threaded holes (5) obtained within said aluminum-based upper part (2).

2. Casing according to claim 1, **characterized in that** the aforesaid magnesium-based lower part (6) includes, in turn, an upper section (7) and a lower section (8) which entirely or partly incorporate the support means for the crankshaft, said upper and lower parts (7, 8) being overlapped with each other in correspondence with a plane (9) substantially passing through the axis (10) of the engine crankshaft.

3. Casing according to claim 1, **characterized in that** the aforesaid magnesium-based lower part (6) includes, in turn, an upper section (7) and a lower section (8) which are overlapped in correspondence with a plane (9) substantially passing through the axis (10) of the engine crankshaft, and **in that** the support means for the engine crankshaft are defined by inserts (11, 12) incorporated within the two aforesaid upper and lower sections (7, 8) based on magnesium.

4. Casing according to claim 3, **characterized in that** the aforesaid inserts (11, 12) are incorporated by melting.

5. Casing according to claim 3, **characterized in that** the aforesaid inserts (11, 12) are local stiffeners inserted by soaking of fiber cushions, for example alumina fibers.

6. Casing according to the preceding claims, **characterized in that** the inserts (11, 12) incorporated in the magnesium-based sections (7, 8) are all made of a material other than the one constituting said sections (7, 8).

7. Casing according to claim 6, **characterized in that** the inserts (11, 12) are made of an aluminum-based material.

8. Casing according to claim 1, **characterized in that** the aforesaid fastening screws (16) show heads (16a) abutting on surfaces which are defined by the aforesaid inserts (12) incorporated in the magnesium-based lower section (8).

9. Casing according to claim 1, **characterized in that** the aforesaid fastening screws (16) pass through the magnesium-based lower section (8) in correspondence with holes (17) obtained in the aforesaid inserts (12) incorporated in said lower section (8).

10. Casing according to claim 9, **characterized in that** the aforesaid fastening screws (16) further pass through holes obtained in the aforesaid inserts (11) incorporated in the magnesium-based upper section (7), as well as holes (7a) directly obtained in the material forming the aforesaid magnesium-based upper section (7).

11. Casing according to claim 3, **characterized in that** the aforesaid inserts (11) incorporated in the magnesium-based upper section (7) show a curved central body (13) ending at each end in a plurality of ears (14) parallel and spaced with each other, having coaxial holes (15) for passing through said fastening screws (16).

12. Casing according to claim 3, **characterized in that** each of the aforesaid inserts (12) incorporated in the magnesium-based lower section (8) shows a central body (12a) substantially H-shaped with a central part defining a support for the engine crankshaft and two side columns having ends defining surfaces (12c) for the support of the heads (16a) of the fastening screws (16).

13. Casing according to claim 12, **characterized in that** each of the aforesaid inserts (12) incorporated in the magnesium-based lower section (8) further shows two flat wings (12b) laterally protruding from the central body of the insert (12) and substantially coplanar therewith.

14. Casing according to claim 13, **characterized in that** each of said flat wings shows one or more holes or cavities (12d, 12e).
